Europäisches Patentamt

(19) European Patent Office (11) Numéro de publication: **0 065 177**

Office européen des brevets **B1**

(12) FASCICULE DE BREVET EUROPEEN

(45) Date de publication du fascicule du brevet: (51) Int. Cl.⁴: **H 02 G 15/076**
02.05.85

(21) Numéro de dépôt: **82103806.4**

(22) Date de dépôt: **04.05.82**

(54) Pot pour répéteurs d'une ligne de transmission.

(30) Priorité: **07.05.81 FR 8109072**

(43) Date de publication de la demande:
**24.11.82 Bulletin 82/47**

(45) Mention de la délivrance du brevet:
**02.05.85 Bulletin 85/18**

(84) Etats contractants désignés:
**BE DE FR GB IT LU NL**

(56) Documents cités:
**DE - A - 2 814 018
DE - B - 1 044 207
DE - B - 2 445 381
DE - U - 7 911 860
FR - A - 2 321 794
FR - A - 2 440 636**

(73) Titulaire: **COMPAGNIE INDUSTRIELLE DES
TELECOMMUNICATIONS CIT-ALCATEL S.A. dite:,
12, rue de la Baume, F-75008 Paris (FR)**

(72) Inventeur: **Mauclere, Bernard, 14 Allée de Scorff,
F-78310 Maurepas (FR)**
Inventeur: **Jamet, Daniel, 9 Allée des Iris Hameaux de
Villiers, F-91620 Nozay (FR)**

(74) Mandataire: **Weinmiller, Jürgen et al, Zeppelinstrasse 63,
D-8000 München 80 (DE)**

## Description

Un pot pour répéteurs d'une ligne de transmission est formé d'une enceinte étanche servant de logement à des répéteurs en boîtiers individuels et d'un dispositif de raccordement assurant les liaisons électriques au travers de l'enceinte étanche entre les organes des répéteurs et les câbles de la ligne de transmission.

On connait des pots pour répéteurs dont l'enceinte étanche est formée d'une cuve avec un couvercle à fermeture hermétique renfermant un châssis avec des alvéoles servant de logements individuels aux répéteurs et dont le dispositif de raccordement est constitué d'un câble amorce pénétrant dans la cuve par un tube muni d'un presse-étoupe et éventuellement noyé dans du brai, et se terminant à l'intérieur de la cuve par des connecteurs multibroches classiques prévus pour recevoir par emboîtement les prises fixées sur les boîtiers individuels des répéteurs, dans leur partie émergeant du châssis. Ces pots nécessitent un câblage important en usine, le montage de connecteurs multibroches classiques à l'extrémité d'un câble de télécommunication n'étant par envisageable sur le site.

On connait également des pots pour répéteurs prévus pour un éventuel câblage sur le site. Ces pots comportent une cuve avec couvercle à fermeture hermétique fixée sur une boîte de raccordement. La cuve renferme un châssis formé d'un panier au fond duquel sont fixées des rangées de connecteurs sur lesquels viennent s'embrocher les boîtier individuels des répéteurs. Le dispositif de raccordement se compose d'inserts métalliques montés sur des perles de verre fixées au travers d'une barrière d'étanchéité séparant la boîte de raccordement de l'intérieur de la cuve, d'un câblage reliant les inserts métalliques aux connecteurs de fond de panier et d'un câble amorce qui pénètre dans la boîte de raccordement par un système de presse-étoupe assurant l'étanchéité et dont les conducteurs aboutissent sur les inserts métalliques. Ces pots ont l'inconvénient de nécessiter un câblage important, chaque liaison comportant plusieurs raccordements.

Il est par ailleurs connu par le document DE-B-1 044 207 une boîte étanche de raccordement pour extrémité de câble multiconducteur comportant un boîtier qui est pourvu d'une arrivée de câble latérale étanche et d'un couvercle fermant hermétiquement et qui renferme une plaque isolante supportant des bornes de connexion la traversant de part en part. Mais cette boîte de raccordement est totalement inadaptée au logement de boîtiers de répéteurs pour lequel elle n'a pas été prévue.

Il est aussi connu par le brevet FR-A-2 321 794 une tête de câble universelle permettant de raccorder des boîtiers de protection de ligne d'un câble téléphonique. Cette tête de câble comprend un socle obtenu par juxtaposition de modules présentant des logements pour l'enfichage des boîtiers, deux zones latérales équipées de broches de raccordement traversantes et un câblage interne réunissant les broches traversantes à des connecteurs équipant les fonds des logements. Cette tête de câble non prévue pour être équipée de boîtiers de répéteurs présente l'inconvénient de nécessiter un câblage important, chaque liaison comportant un raccordement interne aux modules du socle.

La présente invention a pour but un pot pour répéteurs à câblage simplifié pouvant se faire sur le site et permettant de se raccorder directement à l'extrémité d'un câble.

Elle a également pour put un pot pour répéteurs de conception simple avec une bonne étanchéité et une bonne accessibilité aux équipements qu'il renferme.

Le pot pour répéteurs selon l'invention comporte:

— une cuvette pourvue sur un côté au moins d'une arrivée de câble avec des moyens assurant l'étanchéité au passage du câble,

— un connecteur de fond de panier avec un socle isolant se fixant à plat dans la cuvette en laissant un espace libre pour le câblage entre lui et le fond de la cuvette et des broches métalliques traversant le socle de part en part et se terminant sur la face inférieure du socle par des bornes de contact destinées aux conducteurs du câble,

— et un couvercle fermant hermétiquement la cuvette.

Le socle isolant du connecteur de fond de panier sert de support aux boîtier individuels des répéteurs. Sa face supérieure présente des rangées d'alvéoles qui assurent le guidage et le positionnement des boîtiers individuels des répéteurs et au fond desquels apparaissent les extrémités supérieures des broches métalliques venant se raccorder aux boîtiers. Sa face inférieure présente, entre les rangées d'alvéoles des caniveaux prévus pour loger les extrémités des conducteurs du câble (8) au cours de leurs trajets entre l'arrivée du câble et les broches auxquelles ils aboutissent.

Le pot pour répéteurs selon l'invention ne comporte pas de câblage intermédiaire et a pour avantage de réduire considérablement le nombre de points de coupures, soudures ou interconnexions avec les autres équipements le tout avec une grande facilité de mise en oeuvre.

D'autres caractéristiques et avantages de l'invention ressortiront des revendications jointes et de la description ci-après d'un mode de réalisation donné à titre d'exemple.

Cette description sera faite en regard des dessins dans lesquels:

la figure 1 est une coupe verticale longitudinale d'un pot pour répéteurs selon l'invention,

la figure 2 est une coupe verticale et transversale selon la ligne II-II de la figure 1,

la figure 3 est une vue de dessus, couvercle enlevé, du pot pour répéteurs représenté aux figures précédentes,

la figure 4 est une vue partielle de dessus du connecteur de fond de panier du pot pour répéteurs représenté aux figures précédentes, détaillant le positionnement et la forme d'un jeu de contacts au fond d'une alvéole dans laquelle s'encastre la base d'un boîtier individuel de répéteur,

la figure 5 est une vue partielle et grossie de la coupe de la figure 2 détaillant plus particulièrement la forme des broches du connecteur de fond de panier et des arceaux de maintien des boîtiers individuels de répéteurs,

la figure 6 est une vue partielle et grossie de la coupe de la figure 1 détaillant la forme nervurée du socle du connecteur de fond de panier,

la figure 7 est une vue partielle en perspective illustrant la constitution d'une liaison électrique à l'intérieur du pot pour répéteurs depuis la carte de circuits imprimés portant les composants d'un répéteur jusqu'au conducteur du câble sortant du pot pour répéteurs,

la figure 8 est une vue partielle et grossie de la coupe de la figure 1 détaillant l'arrivée de câble dans le pot pour répéteurs,

la figure 9 représente les positions respectives de la cuvette du pot pour répéteurs, du connecteur de fond de panier et de l'extrémité de câble lors d'un câblage sur le site

et la figure 10 illustre une configuration de câblage du connecteur de fond de panier du pot pour répéteurs.

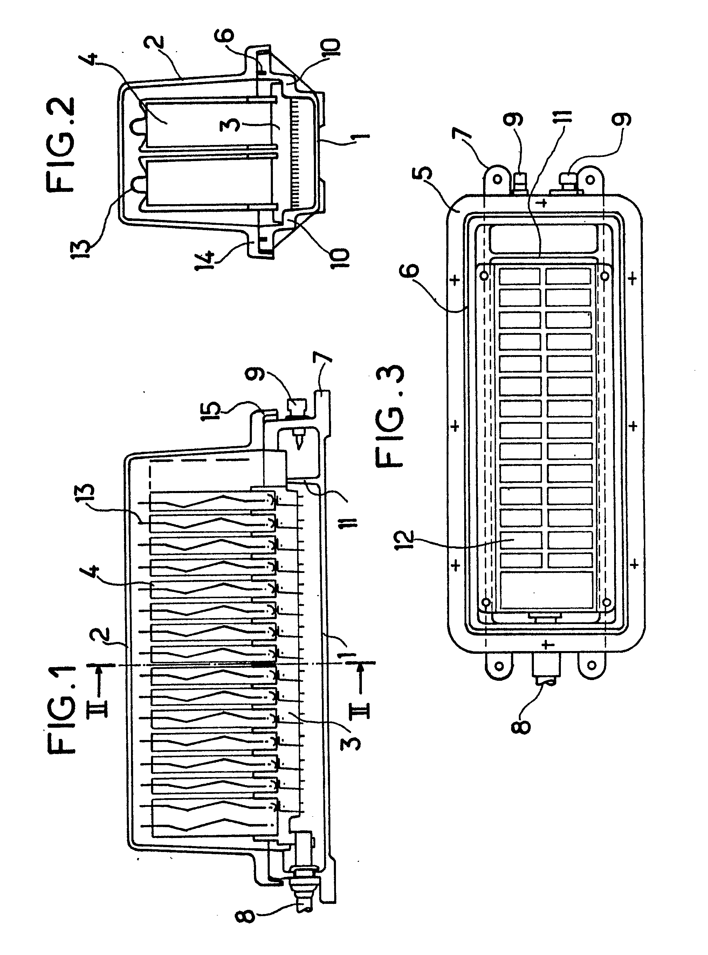

Les figures 1, 2 et 3 illustrent l'organisation générale et l'implantation des divers éléments d'un pot pour répéteurs conforme à l'invention.

Le pot pour répéteurs comporte une cuvette 1 de faible profondeur fermée par un couvercle 2 en forme de cloche, et un connecteur de fond de panier 3 sur lequel sont fixés les boîtiers individuels 4 des répéteurs.

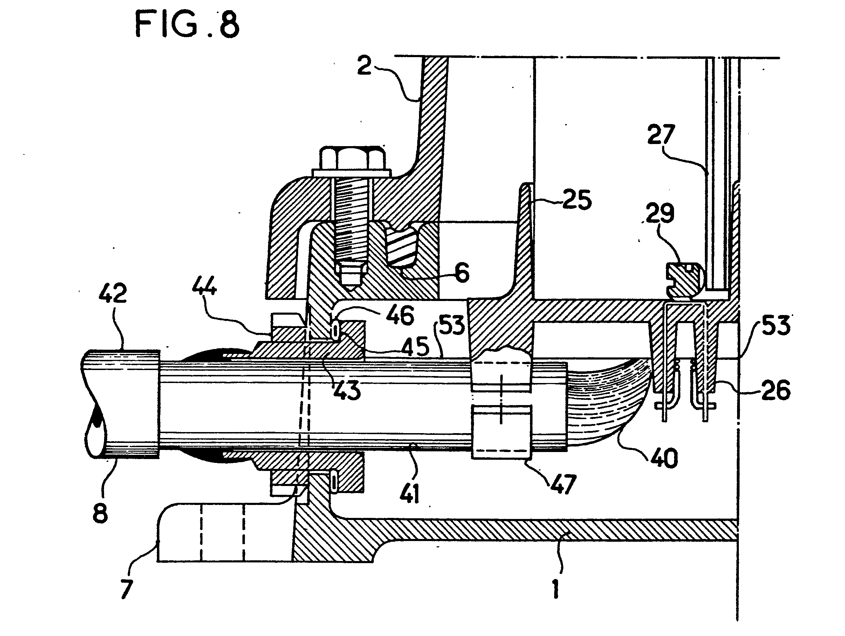

La cuvette 1 est de forme générale rectangulaire. Elle a un large rebord plat 5 dans lequel est creusée une rainure périphérique 6 logeant un joint d'étanchéité. Elle est fixée sur son support par des pattes extérieures 7 disposées dans le prolongement de son fond sur ses petits côtés. Sa paroi latérale est percée sur l'un de ses petits côtés d'une arrivée pour câble de ligne 8 avec un système d'étanchéité détaillé à la figure 8 et sur l'autre petit côté de deux orifices 9 avec bouchons étanches d'obturation prévues pour d'éventuelles valve de pressurisation et prises pour câbles de service utilisés pour des voies auxiliaires. La cuvette 1 présente sur sa paroi latérale interne, le long de ses grands côtés, des banquettes 10 horizontales, placées à mi-hauteur, sur lesquelles repose le connecteur de fond de panier 3. Ces banquettes 10 sont reliées, côté des arrivées 9 pour câbles de services, par une cloison verticale 11 qui partage le fond de la cuvette 1 en deux compartiments que l'on peut remplir séparément d'un compound pour assurer l'étanchéité des extrémités de câble.

Le connecteur de fond de panier 3 est formé d'un socle isolant plat rectangulaire traversé par des broches de connexion électriques. Le socle isolant occupe la majeure partie de la surface intérieure de la cuvette 1. Il présente sur sa face supérieure deux rangées d'alvéoles 12 peu profondes, aux dimensions des fonds des boîtiers individuels 4 de répéteur. Les boîtiers individuels 4 de répéteur sont placés debout sur le connecteur de fond de panier 3 leur fond encastré dans les alvéoles 12 et sont maintenus en place grâce à des arceaux 13 en fil métallique élastique dont les extrémités se crochettent dans le socle isolant de part et d'autre des alvéoles 12. Les broches de connexion, qui seront décrites ultérieurement, traversent le socle au droit des alvéoles 12 et se terminent dans ces derniers par des contacts par pression destinés à coopérer avec des contacts par pression qui sont placés en vis-à-vis sur les fonds des boîtiers individuels 4 des répéteurs et sur lesquels sont ramenées l'ensemble des liaisons électriques des répéteurs avec l'extérieur.

Le couvercle 2 est en forme de cloche avec des dimensions internes suffisantes pour englober le volume occupé par les boîtiers individuels 4 de répéteur disposés sur le connecteur de fond de panier 3. Il présente un rebord plat 14, de même contour que celui 5 de la cuvette 1, qui sert de surface d'appui au joint d'étanchéité et qui est bordé par un larmier 15.

Il est fixé à la cuvette 1 qu'il ferme hermétiquement, par des boulons répartis le long de son rebord 14 à l'extérieur du joint d'étanchéité.

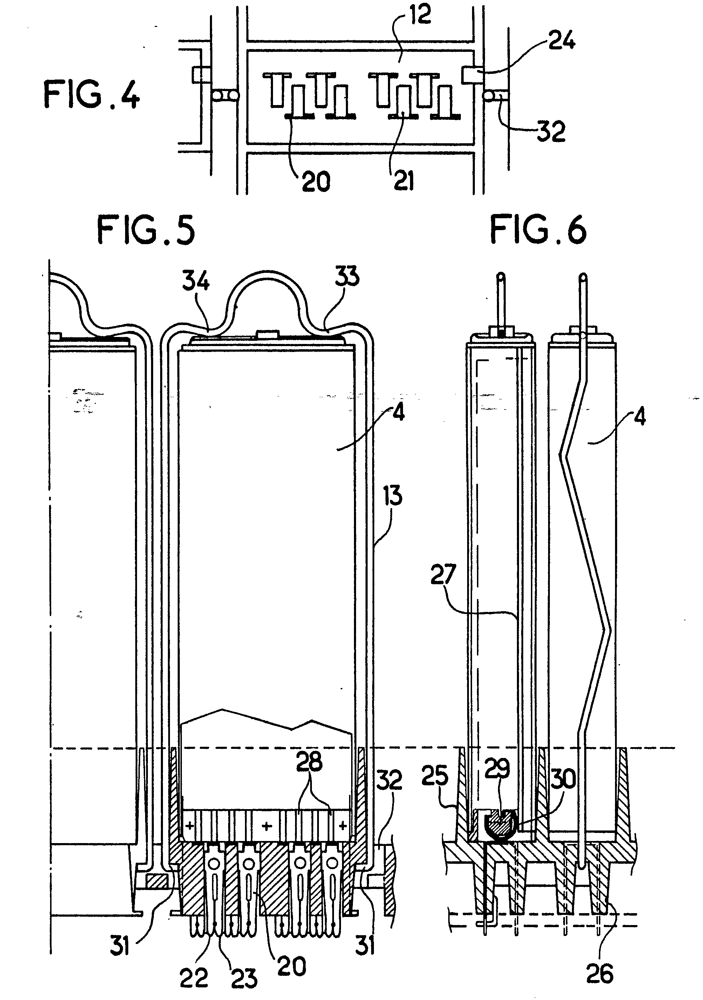

Les figures 4, 5 et 6 détaillent plus particulièrement les formes des broches de connexion et du socle isolant du connecteur de fond de panier 3.

Les broches de connexion 20 du connecteur de fond de panier 3 sont réalisées à partir d'un ruban métallique découpé et plié. Elles se terminent au fond d'une alvéole 12 par une languette médiane 21 rabattue à angle droit et sur la face inférieure du socle isolant par deux jambages 22, 23 formant une fourche et servant de connexion auto-dénudante.

Comme le montre la figure 4 les broches de connexion 20 sont au nombre de huit par alvéole 12 réparties sur deux rangées parallèles à la longueur de l'alvéole de part et d'autre d'une ligne médiane avec leurs languettes 21 rabattues sur cette ligne médiane. Elles forment avec chaque alvéole 12 un connecteur rectangulaire avec huit contacts plats alignés. Un ergot de détrompage 24 disposé en bordure de chaque alvéole définit un seul sens d'introduction pour le connecteur ainsi constitué.

Le socle isolant a une structure nervurée lui assurant une bonne résistance pour un faible poids. Ces nervures sont constituées d'une part, sur sa face supérieure, par les bordures 25 qui délimitent les alvéoles 12 et servent au guidage et au positionnement des boîtiers individuels 4 de répéteur et d'autre part, sur sa face inférieure, par des bourrelets 26 qui coïncident avec les rangées de broches de connexion 20 des alvéoles 12 et dans lesquels sont pratiquées les fentes servant de logement à ces dernières.

Les figures 5 et 6 détaillent également la forme des boîtiers individuels 4 de répéteurs, de leur connecteur et de leur arceau de maintien 13.

Un boîtier individuel 4 de répéteur se présente sous la forme d'une cassette parallélépipédique de faible épaisseur dont la hauteur et la largeur correspondent aux dimensions de la carte de circuits imprimés 27 sur laquelle sont câblés les composants du répéteur. L'ensemble des liaisons électriques d'un répéteur avec l'extérieur est ramené sur huit pistes conductrices parallèles 28 à l'extrémité de sa carte de circuits imprimés 27 tournée vers le fond de son boîtier. Ces huits pistes conductrices parallèles 28 ont le même écartement que les huit contacts plats alignés d'un alvéole 12 du connecteur de fond de panier 3 auxquels elles peuvent être raccordées grâce à un connecteur à contacts élastiques fixé au fond du boîtier individuel 4. Ce connecteur se compose d'une barrette isolante 29 portant huit contacts élastiques 30. La barrette isolante 29 comporte huit rainures transversales ayant le même écartement que les pistes

conductrices 28 ou que les contacts plats d'un alvéole 12 et servant de logement aux huit contacts élastiques 30. Elle est fixée sur l'extrémité de la carte de circuits imprimés 27 et accessible par une ouverture du fond du boîtier individuel 4. Les contacts élastiques 30 sont formés de lamelles métalliques pliées en plusieurs pans selon un arc de cercle, un premier pan en saillie par rapport à l'une des faces de la barrette isolante 29 s'appuyant sur une piste conductrice 28 de la carte de circuits imprimés 27 tandis qu'un autre pan également en saillie mais orienté à angle droit parallèlement au fond du boîtier individuel 4 vient en vis-à-vis d'un contact plat d'un alvéole 12. Une encoche pratiquée à une extrémité de la barrette isolante 29 coopère avec l'ergot 24 d'un alvéole 12 pour assurer un détrompage.

La pression entre les contacts élastiques 30 portés par le fond d'un boîtier individuel 4 de répéteur et les contacts plats d'une alvéole 12 est assurée par un arceau de maintien 13 qui délivre une pression d'au moins 100 grammes par contacts et qui immobilise le boîtier individuel 4 sur le fond de panier 3. Cet arceau de maintien 13 est réalisé en fil métallique plié. Il se termine par des becs de crochet 31 qui s'agrippent sous les rebords d'ouvertures 32 pratiquées dans le socle isolant de part et d'autre des alvéoles 12. Ses montants font un léger zigzag lui donnant de l'élasticité. Il forme à son sommet une boucle de préhension bordée par deux contre-courbes 33, 34 qui s'encliquettent entre des bossages portés par la face avant des boîtiers individuels 4 de répéteur.

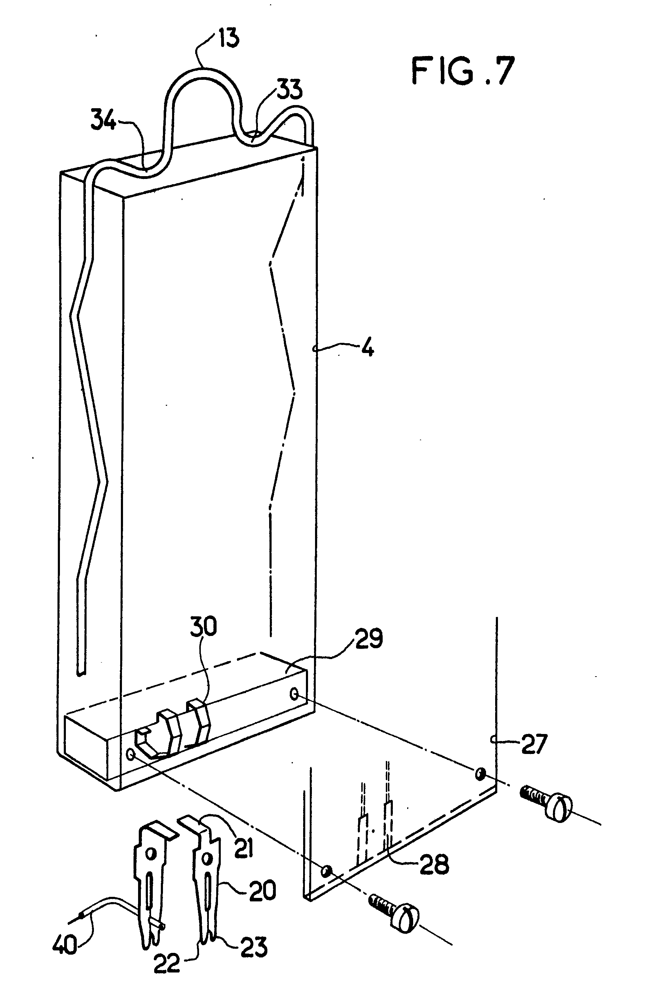

La figure 7 montre le petit nombre de raccordements que comporte une liaison entre un conducteur 40 du câble 8 (figure 8) de la ligne et une piste conductrice 28 d'une carte de circuit imprimé 27 sur laquelle sont câblés les composants d'un répéteur. Cette liaison ne comporte en effet qu'une broche 20 raccordée par une connexion sans soudure à l'extrémité du conducteur 40 et un contact élastique 30 en contact par pression avec la languette médiane 21 de la broche 20 et avec la piste conductrice 28, ce qui la rend particulièrement faible.

La figure 8 détaille l'arrivée du câble 8 dans la cuvette 1 ainsi que son système d'étanchéité. Le câble 8 est un câble multiconducteurs avec une enveloppe métallique 41 recouverte d'une gaine de protection 42. Le passage du câble 8 dans la cuvette 1 est de diamètre supérieur au câble 8 ce qui permet de tirer une longueur de câble au travers de la cuvette lors du câblage du connecteur de fond de panier 3. A son passage au travers de la paroi de la cuvette 1 le câble 8 est dépouillé de sa gaine de protection 42 et enfilé dans une pièce de traversée qui assure l'étanchéité au passage du câble 8 au travers de la paroi de la cuvette 1 et qui est formée d'un manchon 43 et d'un écrou 44. Le manchon 43 est métallique avec un diamètre intérieur adapté à celui de l'enveloppe métallique 41 du câble à laquelle il est soudé. Il présente extérieurement une partie filetée qui est enfilée dans le passage de la paroi de la cuvette et sur laquelle se visse l'écrou 44 placé à l'extérieur de la cuvette 1. Cette partie filetée est réunie à une partie de plus grand diamètre placée à l'intérieur de la cuvette 1 par un épaulement 45 contre lequel prend appui un joint d'étanchéité 46. L'extrémité de l'enveloppe métallique 41 du câble est prise dans un serre câble 47 solidaire du support isolant du connecteur de fond de panier 3.

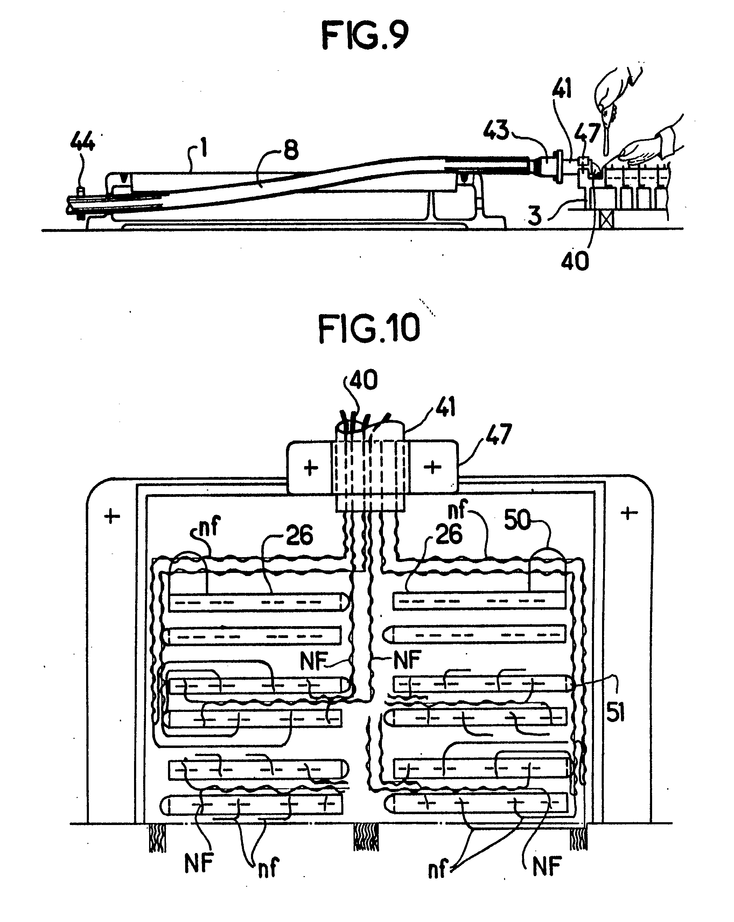

La figure 9 illustre les positions du câble 8, de la cuvette 1 et du connecteur de fond de panier 3 lors du câblage de ce dernier sur le site. Le câble 8 est tiré au travers de l'écrou 44 de la pièce de traversée et au travers de son passage à travers la cuvette 1. L'extrémité du câble 8 est préparée avec son enveloppe métallique 41 dégagée pour permettre le montage et le soudage du manchon 43 de la pièce de traversée. L'extrémité du câble est ensuite fixée dans le serre câble 47 du connecteur de fond de panier 3 qui, retourné, offre une parfaite accessibilité pour le câblage.

Ce dernier ne nécessite aucune soudure grâce aux extrémités auto-dénudantes des broches 20 du connecteur de fond de panier 3. Il s'effectue avantageusement selon le plan de la figure 10 qui donne une vue partielle de la face inférieure du connecteur de fond de panier 3 avec ses bourrelets 26 d'où émergent les extrémités auto-dénudantes des broches 20 et entre lesquels se dessinent des caniveaux servant de chemin de câbles. Les conducteurs du câble 8 indexés par NF dans lesquels circulent des signaux à fort niveau sont amenés aux broches 20 par le caniveau central tandis que les autres conducteurs du câble 8 indexés par nf dans lesquels circulent des signaux à niveau faible sont amenés aux broches 20 par les caniveaux latéraux. Cette disposition assure une très faible diaphonie. Les bourrelets 26 servent de base à des languettes 50, 51 maintenant les conducteurs dans les caniveaux.

Le connecteur de fond de panier 3 une fois câblé est retourné, mis en place dans la cuvette 1 et vissé à cette dernière. L'écrou 44 de la pièce de traversée est serré. Le compartiment de la cuvette côté câble 8 est alors rempli d'un compound immobilisant le tout et assurant l'étanchéité au niveau de l'extrémité du câble 8. La hauteur de remplissage n'est pas critique mais elle doit être telle que l'extrémité du câble soit entièrement recouverte. La hauteur moyenne est repérée dans la figure 8 par le trait 53.

**Revendications**

1. Pot pour répéteurs d'une ligne de transmission en boîtiers individuels (4) comportant:
— une cuvette (1) pourvue sur un côté au moins d'une arrivée de câble (8) avec des moyens assurant l'étanchéité au passage du câble (8),
— un connecteur de fond de panier (3) avec un socle isolant se fixant à plat dans la cuvette (1) en laissant un espace libre pour le câblage entre lui et le fond de la cuvette (1) et des broches métalliques (20) traversant le socle de part en part et se terminant sur la face inférieure du socle par des bornes de contact destinées aux conducteurs (40) du câble (8),
— et un couvercle (2) fermant hermétiquement la cuvette (1),
ledit pot pour répéteurs étant caractérisé en ce que le socle isolant du connecteur de fond de panier (3) sert de support aux boîtiers individuels (4), sa face supérieure présentant des rangées d'alvéoles (12) qui assurent le guidage et le positionnement des boîtiers individuels (4) et au fond desquels apparaissent les extrémités supérieurs des broches métalliques (20) venant se raccorder aux boîtiers, et sa face inférieure présentant, entre les rangées d'alvéoles (12) des caniveaux prévus pour loger les extrémités des conducteurs du câble (8) au cours de leurs trajets entre l'arrivée de câble et les broches (20) auxquelles ils aboutissent.

2. Pot pour répéteurs selon la revendication 1, caractérisé en ce que les caniveaux sont partagés en deux groupes spécialisés l'un pour les conducteurs (NF) parcours par des signaux à fort niveau, l'autre pour les conducteurs (nf) parcours par des signaux à faible niveau.

3. Pot pour répéteurs selon la revendication 1, caractérisé en ce que ledit socle comporte sur sa face inférieure des languettes (50, 51) servant de guide-fils.

4. Pot pour répéteurs selon la revendication 1, caractérisé en ce que le volume compris entre le connecteur de fond de panier (3) et le fond de la cuvette (1) est rempli d'un compound, après câblage du connecteur (3), afin d'assurer une étanchéité complète au niveau de l'extrémité du câble (8).

5. Pot pour répéteurs selon la revendication 1, caractérisé en ce qu'il comporte des arceaux (13) en fil métallique enjambant chaque alvéole (12) et servant à l'arrimage des boîtiers individuels (4) des répéteurs sur le connecteur de fond de panier (3).

6. Pot pour répéteurs selon la revendication 1, caractérisé en ce que lesdites broches (20) se terminent sur la face inférieure du socle par deux jambages (22, 23) formant fourche et servant de connexion auto-dénudante.

7. Pot pour répéteurs selon la revendication 1, caractérisé en ce que lesdites broches (20) se terminent sur la face supérieure du socle par une languette médiane (21) rabattue à angle droit servant de contact par pression.

8. Pot pour répéteurs selon la revendication 1, caractérisé en ce que ladite cuvette (1) comporte le long de sa paroi latérale interne une banquette (10) à mi-hauteur sur laquelle viennent prendre appui les bords du socle isolant du conducteur de fond de panier (3).

**Patentansprüche**

1. Topf für Regenerierverstärker einer Übertragungsleitung, die sich in einzelnen Gehäusen (4) befinden, mit:
— einer Bodenwanne (1), die auf einer Seite mindestens eine Kabelzuleitung (8) mit Mitteln, die die Dichtheit des Kabeldurchgangs bewirken, aufweist,
— einer Anschlussplatte (3) mit einem Isoliersockel, der flach in der Wanne (1) befestigt ist und einen freien Raum für die Verkabelung zwischen ihm und dem Boden der Wanne (1) lässt und mit Metallstiften (20), die den Sockel ganz durchqueren und auf der unteren Seite des Sockels in Kontaktfahnen enden, die für die Leiter (40) des Kabels (8) bestimmt sind,
— und einem Deckel (2), der die Wanne (1) dicht verschliesst,

dadurch gekennzeichnet, dass der Isoliersockel der Anschlussplatte (3) als Träger für die einzelnen Gehäuse (4) dient, wobei seine obere Seite Reihen von Vertiefungen (12) aufweist, die die Führung und die Positionierung der einzelnen Gehäuse (4) sichern und an deren Boden die oberen Enden der Metallstifte (20) erscheinen, die mit den Gehäusen zu verbinden sind, während seine untere Seite zwischen den Reihen von Vertiefungen (12) Führungskanäle aufweist, die vorgesehen sind, um die Enden der Leiter des Kabels (8) in ihrem Verlauf zwischen der Kabelzuleitung und den Stiften (20), an denen sie enden, aufzunehmen.

2. Topf für Regenerierverstärker nach Anspruch 1, dadurch gekennzeichnet, dass die Führungskanäle aufgeteilt sind in zwei spezialisierte Gruppen, eine für die Leiter (NF), die von Signalen mit hohem Pegel durchflossen werden und die anderen für die Leiter (nf), die von Signalen mit niedrigem Pegel durchflossen werden.

3. Topf für Regenerierverstärker nach Anspruch 1, dadurch gekennzeichnet, dass der Sockel auf seiner Unterseite Zungen (50, 51) aufweist, die als Drahtführer wirken.

4. Topf für Regenerierverstärker nach Anspruch 1, dadurch gekennzeichnet, dass das zwischen der Anschlussplatte (3) und dem Boden der Wanne (1) liegende Volumen nach der Verkabelung des Verbinders (3) mit einem Kompound gefüllt wird, um eine vollkommene Dichtheit in Höhe des Kabelendes (8) zu erreichen.

5. Topf für Regenerierverstärker nach Anspruch 1, dadurch gekennzeichnet, dass er Bügel (13) aus Metalldraht aufweist, die jede Kammer (12) umfassen und zur Befestigung der einzelnen Gehäuse (4) der Regenerierverstärker auf der Anschlussplatte (3) dienen.

6. Topf für Regenerierverstärker nach Anspruch 1, dadurch gekennzeichnet, dass die Stifte (20) auf der unteren Seite des Sockels in zwei Schenkeln (22, 23) enden, die eine Gabel bilden und als die Isolierung durchschneidende Verbindung dienen.

7. Topf für Regenerierverstärker nach Anspruch 1, dadurch gekennzeichnet, dass die Stifte (20) auf der oberen Seite des Sockels in einer mittleren Zunge (21) enden, die in rechtem Winkel umgebogen ist und als Druckkontakt dient.

8. Topf für Regenerierverstärker nach Anspruch 1, dadurch gekennzeichnet, dass die Wanne (1) entlang ihrer inneren Seitenwand einen Vorsprung (10) auf halber Höhe aufweist, auf dem sich die Ränder des Isoliersockels der Anschlussplatte (3) abstützen.

**Claims**

1. A pot for transmission line repeaters which are housed in individual casings (4), the pot comprising:
— a shallow bowl (1) provided on one side at least with a cable (8) inlet, with means ensuring the sealing of the cable (8) passage,
— a mother board (3) with an insulating base fixed planely in the bowl (1) while leaving a clear space for the wiring purposes between it and the bottom of the bowl (1), and with metal pins (20) completely traversing the base and endling at the lower side in contact terminals for the conductors (40) of the cable (8),

— and a cover (2) hermetically closing the bowl (1),

characterized in that the insulating base of the mother board (3) serves as a support for the individual casings (4), its upper face presenting rows of recesses (12) which ensure the guiding and the positioning of the individual casings (4), and on the bottom of which appear the upper ends of the metal pins (20) being connected to the casings, whereas its lower face presents channels between the rows of recesses (12) for housing the ends of the cable (8) conductors along their passage between the cable inlet and the pins (20) to which they are connected.

2. A pot for repeaters according to claim 1, characterized in that the channels are arranged in two specialized groups, one group for the conductors (NF) conveying high level signals and the other group for the conductors (nf) conveying low level signals.

3. A pot for repeaters according to claim 1, characterized in that said base comprises on its lower face tongues (50, 52) which are intended to guide the wires.

4. A pot for repeaters according to claim 1, characterized in that the space included between the mother board (3) and the bottom of the bowl (1) is filled with a compound after the cable has been wired to the mother board (3), in order to ensure a complete sealing at the end level of the cable (8).

5. A pot for repeaters according to claim 1, characterized in that it comprises spring clips (13) made of metal wire, fitted astride each recess (12) and meant to clamp the individual casings (4) of the repeaters onto the mother board (3).

6. A pot for repeaters according to claim 1, characterized in that said pins (20) terminate on the lower face of the base by two legs (22, 23) forming a fork and ensuring the connection by cutting through the insulation.

7. A pot for repeaters according to claim 1, characterized in that said pins (20) terminate on the upper face of the base in a median ledge (21) bent back at a right angle, to constitute a connection by pressure.

8. A pot for repeaters according to claim 1, characterized in that said bowl (1) comprising along its inner side wall at midheight a bench (10) on which the rims of the insulating base of the mother board (3) are supported.

0 065 177

FIG.2

FIG.1

FIG.3

7

# FIG.4

# FIG.5

# FIG.6

FIG.7

FIG.8

# FIG.9

# FIG.10